# EUROPEAN PATENT SPECIFICATION

(11) **EP 3 962 147 B1**
(45) Date of publication and mention of the grant of the patent: **15.10.2025**
(21) Application number: 19926439.1
(22) Date of filing: 24.04.2019
(51) Int. Cl.: H04W 24/02, H04W 24/10, H04W 76/40

(54) **MEASUREMENT TRIGGER METHOD AND APPARATUS, MEASUREMENT METHOD AND APPARATUS, BASE STATION AND USER EQUIPMENT**
MESSAUSLÖSEVERFAHREN UND -VORRICHTUNG, MESSVERFAHREN UND GERÄT, BASISSTATION UND BENUTZERGERÄT
APPAREIL ET PROCÉDÉ DE DÉCLENCHEMENT DE MESURE, PROCÉDÉ ET APPAREIL DE MESURE, STATION DE BASE ET ÉQUIPEMENT UTILISATEUR

(43) Date of publication of application: 02.03.2022
(73) Proprietor: Beijing Xiaomi Mobile Software Co., Ltd., Beijing 100085 (CN)
(72) Inventor: HONG, Wei, Beijing 100085 (CN)
(74) Representative: dompatent von Kreisler Selting Werner - Partnerschaft von Patent- und Rechtsanwälten mbB
(86) International application number: PCT/CN2019/084144
(87) International publication number: WO 2020/215259

(56) References cited:
- EP-A1- 2 437 540
- WO-A1-2015/113309
- CN-A- 101 521 897
- CN-A- 101 998 454
- CN-A- 101 998 463
- CN-A- 102 111 791
- CN-A- 102 111 791
- US-A1- 2017 347 279
- US-A1- 2018 063 737
- CATT: "MDT enhancements for On-demand SI", vol. RAN WG2, no. electronic; 20210412 - 20210420, 2 April 2021 (2021-04-02), XP052174714, Retrieved from the Internet <URL:https://ftp.3gpp.org/tsg_ran/WG2_RL2/TSGR2_113bis-e/Docs/R2-2103097.zip R2-2103097.docx> [retrieved on 20210402]

## Description

### TECHNICAL FIELD

The present disclosure relates to the field of communication technology, and in particular, to a measurement triggering method and device, measurement method and device, base station, user equipment, and computer-readable storage medium.

### BACKGROUND

A drive test is one of the most commonly used test methods for road wireless signals in the communications industry. The drive test may reflect a status of a network, may directly measure and evaluate network performance, and may point out a network problem. Traditional network optimization is based on drive test data. Network data such as level and quality is collected through a drive test instrument, the network problem is discovered by analyzing these data, and then network optimization is performed for the problem area. Such method often requires a lot of manpower, material resources, and financial resources, and also has very high experience requirements for network optimization personnel. A minimization of drive test (MDT) technology defined by the 3rd generation partnership project (3GPP) mainly uses a measurement report reported by a mobile phone to obtain a relevant parameter required for network optimization.

With the MDT technology, it may: 1) reduce drive test overhead and shorten optimization cycle, thereby reducing the cost of network optimization and maintenance of a mobile communication operator; 2) collect measurement information of the entire area that cannot be performed by the traditional drive test, such as the measurement information of a narrow road, forest and private place, therefore, the network performance can be evaluated more objectively, and the results of the network evaluation can be closer to the user experience, which brings higher user satisfaction; and 3) reduce traditional road measurement, thereby reducing carbon dioxide emissions and thus protecting the environment.

In order to make the MDT more effective, the application scenarios thereof currently mainly include coverage optimization, capacity optimization, mobile optimization, quality of service (QoS) guarantee and the like.

Currently, the MDT is initiated by operation administration and maintenance (OAM), and the activation of MDT functions that the OAM is responsible for includes: MDT activation based on management or area and MDT activation based on signaling.

However, that the MDT function in the new radio (NR) of the fifth-generation mobile communication network (5G) is activated by the OAM will have the following problem, i.e., the base station side cannot obtain user equipment (UE) measurement information for rapid radio resource management (RRM), mobility, and beam management.

Related art can be found in WO2015/113309A1, EP2437540A1, CN102111791A and US 2018/063737A1. WO2015/113309A1 discloses the UE receiving from a BS a MDT measurement triggering request via broadcast tranmission, the UE performing the MDT measurements, the UE indicating to the BS that it has performed the MDT measurements, the UE receiving a MDT measurement information reporting request and the UE sending to the BS the MDT measurement report. US 2018/063737A1 discloses that the BS sends a SIB to the UE including a start indicator and a Report Indicator and further comprises an identification of one or more target UEs.

It should be noted that, information disclosed in the above background portion is provided only for better understanding of the background of the present disclosure, and thus it may contain information that does not form the prior art known by those ordinary skilled in the art.

### SUMMARY

Accordingly, the present invention provides a measurement triggering method and device, measurement method and device, and computer-readable storage medium in accordance with claims which follow.

The invention is set out in the appended set of claims. Reference is also made in the following to other embodiments corresponding to examples deemed useful to understand the invention, even if they do not fall within the scope of the claims.

A first aspect of the present disclosure provides a measurement triggering method, which is applied to a base station, including:
determining that there is a need for a user equipment (UE) to start a minimization of drive test (MDT) measurement; and
sending an MDT measurement triggering request through broadcast signaling to trigger a corresponding UE to perform the MDT measurement.

In an embodiment, sending the MDT measurement triggering request through the broadcast signaling includes:
adding first signaling into the broadcast signaling;
adding at least one of an identity of the UE needing to start the MDT measurement and an identity of a group including the UE needing to start the MDT measurement, and an MDT configuration parameter into the first signaling; and
sending the MDT measurement triggering request through the broadcast signaling added with the first signaling.

In an embodiment, sending the MDT measurement triggering request through the broadcast signaling includes:
adding first signaling into the broadcast signaling;
adding an MDT configuration parameter into the first signaling; and
sending the MDT measurement triggering request through the broadcast signaling added with the first signaling.

In an embodiment, the method further includes:
determining that there is a need for the UE to report stored MDT measurement information; and
sending an MDT measurement information reporting request through the broadcast signaling to trigger the corresponding UE to report the stored MDT measurement information.

In an embodiment, sending the MDT measurement information reporting request through the broadcast signaling includes:
adding second signaling into the broadcast signaling;
adding at least one of an identity of the UE needing to report the MDT measurement information and an identity of a group including the UE needing to report the MDT measurement information into the second signaling; and
sending the MDT measurement information reporting request through the broadcast signaling added with the second signaling.

In an embodiment, the broadcast signaling includes paging signaling or minimum system information.

A second aspect of the present disclosure provides a measurement method, which is applied to a user equipment (UE), including:
receiving a minimization of drive test (MDT) measurement triggering request sent by a base station through broadcast signaling; and
performing an MDT measurement in response to determining, according to the MDT measurement triggering request, that the UE needs to start the MDT measurement.

In an embodiment, receiving the MDT measurement triggering request sent by the base station through the broadcast signaling includes:
receiving the broadcast signaling, and parsing out first identity information and an MDT configuration parameter from the broadcast signaling, and
performing the MDT measurement in response to determining, according to the MDT measurement triggering request, that the UE needs to start the MDT measurement includes:
performing the MDT measurement according to the MDT configuration parameter in response to that an identity of the UE is located in the first identity information or the first identity information is empty.

In an embodiment, the method further includes:
receiving an MDT measurement information reporting request sent by the base station through the broadcast signaling; and
reporting stored MDT measurement information in response to determining, according to the MDT measurement information reporting request, that the UE needs to report the stored MDT measurement information.

In an embodiment, receiving the MDT measurement information reporting request sent by the base station through the broadcast signaling includes:
receiving the broadcast signaling, and parsing out second identity information from the broadcast signaling, and
determining, according to the MDT measurement information reporting request, that the UE needs to report the stored MDT measurement information includes:
determining that the UE needs to report the stored MDT measurement information in response to that an identity of the UE is located in the second identity information or the second identity information is empty.

A third aspect of the present disclosure provides a measurement triggering device, which is applied to a base station, including:
a first determining module, configured to determine that there is a need for a user equipment (UE) to start a minimization of drive test (MDT) measurement; and
a first sending module, configured to, after the first determining module determines that there is the need for the UE to start the MDT measurement, send an MDT measurement triggering request through broadcast signaling to trigger a corresponding UE to perform the MDT measurement.

In an embodiment, the first sending module includes:
a first adding submodule, configured to add first signaling into the broadcast signaling;
a second adding submodule, configured to add at least one of an identity of the UE needing to start the MDT measurement and an identity of a group including the UE needing to start the MDT measurement, and an MDT configuration parameter into the first signaling added by the first adding submodule; and
a first sending submodule, configured to send the MDT measurement triggering request through the broadcast signaling added with the first signaling, the first signaling being added with information by the second adding submodule.

In an embodiment, the first sending module includes:
a third adding submodule, configured to add first signaling into the broadcast signaling;
a fourth adding submodule, configured to add an MDT configuration parameter into the first signaling added by the third adding submodule; and
a second sending submodule, configured to send the MDT measurement triggering request through the broadcast signaling added with the first signaling, the first signaling being added with information by the fourth adding submodule.

In an embodiment, the device further includes:
a second determining module, configured to determine that there is a need for the UE to report stored MDT measurement information; and
a second sending module, configured to, after the second determining module determines that there is the need for the UE to report the stored MDT measurement information, send an MDT measurement information reporting request through the broadcast signaling to trigger the corresponding UE to report the stored MDT measurement information.

In an embodiment, the second sending module includes:
a fifth adding submodule, configured to add second signaling into the broadcast signaling;
a sixth adding submodule, configured to add at least one of an identity of the UE needing to report the MDT measurement information and an identity of a group including the UE needing to report the MDT measurement information into the second signaling added by the fifth adding submodule; and
a third sending submodule, configured to send the MDT measurement information reporting request through the broadcast signaling added with the second signaling, the second signal being added with information by the sixth adding submodule.

In an embodiment, the broadcast signaling includes paging signaling or minimum system information.

A fourth aspect of the present disclosure provides a measurement device, which is applied to a user equipment (UE), including:
a first receiving module, configured to receive a minimization of drive test (MDT) measurement triggering request sent by a base station through broadcast signaling; and
a measurement module, configured to perform an MDT measurement in response to determining, according to the MDT measurement triggering request received by the first receiving module, that the UE needs to start the MDT measurement.

In an embodiment, the first receiving module is configured to:
receive the broadcast signaling, and parsing out first identity information and an MDT configuration parameter from the broadcast signaling, and
the measurement module is configured to:
   perform the MDT measurement according to the MDT configuration parameter in response to that an identity of the UE is located in the first identity information or the first identity information is empty.

In an embodiment, the device further includes:
a second receiving module, configured to receive an MDT measurement information reporting request sent by the base station through the broadcast signaling; and
a report determining module, configured to report stored MDT measurement information in response to determining, according to the MDT measurement information reporting request received by the second receiving module, that the UE needs to report the stored MDT measurement information.

In an embodiment, the second receiving module is configured to:
receive the broadcast signaling, and parsing out second identity information from the broadcast signaling, and
the report determining module is configured to:
   determine that the UE needs to report the stored MDT measurement information in response to that an identity of the UE is located in the second identity information or the second identity information is empty.

A fifth aspect of the present disclosure provides a computer-readable storage medium having computer instructions stored thereon that, when being executed by a processor, implement the steps of the measurement triggering method described above.

An sixth aspect of the present disclosure provides a computer-readable storage medium having computer instructions stored thereon that, when being executed by a processor, implement the steps of the measurement method described above.

The technical solutions provided by the embodiments of the present disclosure may include the following beneficial effects.

If it is determined that the UE needs to start the MDT measurement, the MDT measurement triggering request is sent through the broadcast signaling to trigger the corresponding UE to perform the MDT measurement, so that the base station side may obtain UE measurement information for RRM, mobility, and beam management.

The minimization of drive test (MDT) measurement triggering request sent by the base station through the broadcast signaling is received, and the MDT measurement is performed when it is determined according to the MDT measurement triggering request that the UE needs to start the MDT measurement, so that the MDT measurement information may be reported to the base station.

It should be understood that the above general description and the following detailed description are only exemplary and explanatory, which do not intend to limit the present disclosure. The invention is set out in the appended set of claims.

### BRIEF DESCRIPTION OF THE DRAWINGS

The drawings here are incorporated into the specification and constitute a part of the specification, show embodiments that conform to the present disclosure, and are used together with the specification to explain the principle of the present disclosure.
FIG. 1 is a flowchart of a measurement triggering method shown in an exemplary embodiment of the present disclosure;
FIG. 2 is a flowchart of another measurement triggering method shown in an exemplary embodiment of the present disclosure;
FIG. 3 is a flowchart of a measurement method shown in an exemplary embodiment of the present disclosure;
FIG. 4 is a flowchart of another measurement method shown in an exemplary embodiment of the present disclosure;
FIG. 5 is a signaling flowchart of a measurement method shown in an exemplary embodiment of the present disclosure;
FIG. 6 is a block diagram showing a measurement triggering device according to an exemplary embodiment;
FIG. 7 is a block diagram showing another measurement triggering device according to an exemplary embodiment;
FIG. 8 is a block diagram showing another measurement triggering device according to an exemplary embodiment;
FIG. 9 is a block diagram showing another measurement triggering device according to an exemplary embodiment;
FIG. 10 is a block diagram showing another measurement triggering device according to an exemplary embodiment;
FIG. 11 is a block diagram showing a measurement device according to an exemplary embodiment;
FIG. 12 is a block diagram showing another measurement device according to an exemplary embodiment;
FIG. 13 is a block diagram showing a device suitable for measurement triggering according to an exemplary embodiment; and
FIG. 14 is a block diagram showing a device suitable for measurement according to an exemplary embodiment.

### DETAILED DESCRIPTION

Exemplary embodiments will be described in detail here, and examples thereof are shown in the accompanying drawings. When the following description is made by referring to the drawings, unless otherwise indicated, the same numbers in different drawings indicate the same or similar elements. The implementations described in the following exemplary embodiments do not represent all implementations in the present disclosure. Rather, they are merely examples of devices and methods in some aspects of the present disclosure as detailed in the appended claims.

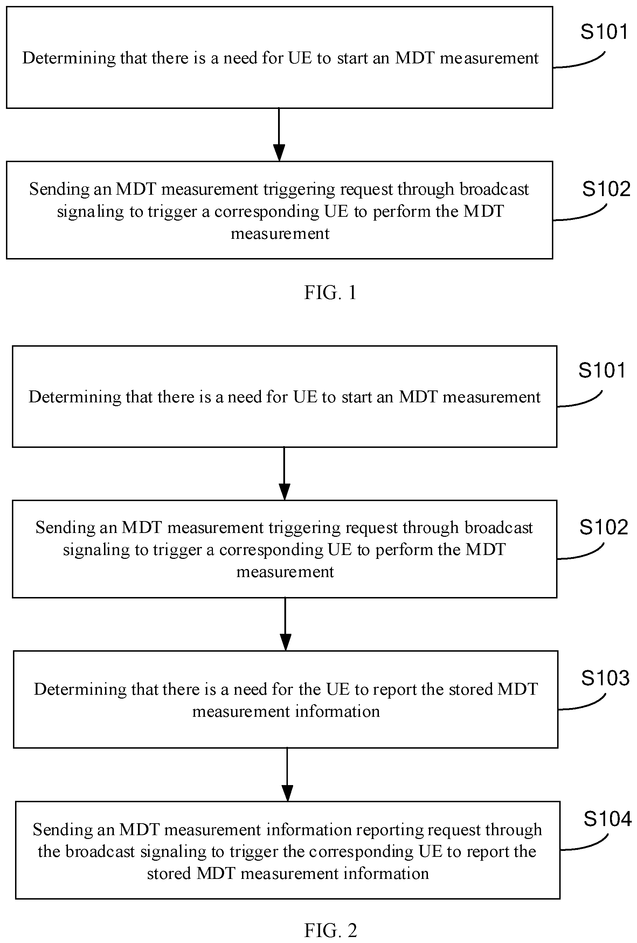

FIG. 1 is a flowchart of a measurement triggering method shown in an exemplary embodiment of the present disclosure. An embodiment is described from a base station side. As shown in FIG. 1, the measurement triggering method includes:
step S101, determining that there is a need for a UE to start an MDT measurement; and
step S102, sending an MDT measurement triggering request through broadcast signaling to trigger a corresponding UE to perform the MDT measurement.

The broadcast signaling may be paging signaling or minimum system information (minimum SI). The minimum SI includes a master information block (MIB) and a system information block (SIB) 1.

In an embodiment, sending the MDT measurement triggering request through the broadcast signaling may include but is not limited to the following situations 11) and 12).

In situation 11), first signaling is added into the broadcast signaling; an MDT configuration parameter and at least one of an identity (ID) of the UE needing to start the MDT measurement and an identity of a group (group ID) including the UE needing to start the MDT measurement are added into the first signaling; and the MDT measurement triggering request is sent through the broadcast signaling added with the first signaling.

The first signaling may be new signaling, for example, may be MDT configuration signaling. The MDT configuration parameter may include logged MDT parameter and/or immediate MDT parameter. The logged MDT parameter is configured to trigger logged MDT, and the immediate MDT parameter is configured to trigger immediate MDT.

In situation 12), first signaling is adding into the broadcast signaling; an MDT configuration parameter is added into the first signaling; and then the MDT measurement triggering request is sent through the broadcast signaling added with the first signaling.

The first signaling may be new signaling, for example, may be MDT configuration signaling. The MDT configuration parameter may include a logged MDT parameter and/or an immediate MDT parameter. The logged MDT parameter is configured to trigger a logged MDT measurement, and the immediate MDT parameter is configured to trigger an immediate MDT measurement.

The difference between the above two situations is that in situation 12), the first signaling does not include any UE ID or group ID.

In the above embodiment, if it is determined that the UE needs to start the MDT measurement, the MDT measurement triggering request is sent through the broadcast signaling to trigger the corresponding UE to perform the MDT measurement, so that the base station side may obtain UE measurement information for RRM, mobility, and beam management.

For the immediate MDT measurement, the MDT measurement information may be reported after the measurement. For the logged MDT measurement, the MDT measurement may be stored after the measurement, but the MDT measurement information will not be reported immediately.

In order to report the stored MDT measurement information, as shown in FIG. 2, the method may further include:
step S103, determining that there is a need for the UE to report the stored MDT measurement information; and
step S104, sending an MDT measurement information reporting request through the broadcast signaling to trigger the corresponding UE to report the stored MDT measurement information.

Second signaling may be added into the broadcast signaling; at least one of an identity of the UE needing to report the MDT measurement information and an identity of a group including the UE needing to report the MDT measurement information is added into the second signaling; and then the MDT measurement information reporting request is sent through the broadcast signaling added with the second signaling.

The second signaling is new signaling, for example, may a stored measurement report (logMeasReport). The signaling may include an ID of a certain UE, or may include a group ID of a group including specific UEs, or may not include any UE ID or group ID.

In the above embodiment, if it is determined that the UE needs to report the stored MDT measurement information, the MDT measurement information reporting request is sent through the broadcast signaling to trigger the corresponding UE to report the stored MDT measurement information, so that the base station side may obtain UE measurement information for RRM, mobility, and beam management.

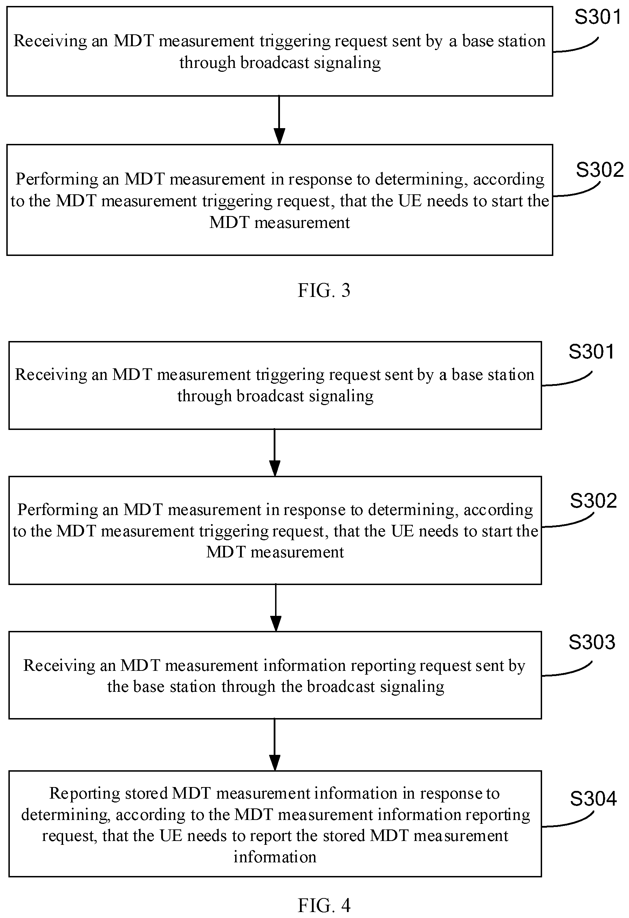

FIG. 3 is a flowchart of a measurement method shown in an exemplary embodiment of the present disclosure. The method is described from the UE side. As shown in FIG. 3, the measurement method includes:
step S301, receiving an MDT measurement triggering request sent by a base station through broadcast signaling, wherein the broadcast signaling may be paging signaling or minimum system information (minimum SI), and the minimum SI includes a master information block (MIB) and a system information block (SIB) 1; and
step S302, performing an MDT measurement in response to determining, according to the MDT measurement triggering request, that the UE needs to start the MDT measurement.

Current UE receives the broadcast signaling sent by the base station, and parses out first identity information and an MDT configuration parameter from the broadcast signaling. It may be determined that the UE needs to start the MDT measurement if an identity of the UE is located in the first identity information or the first identity information is empty. Therefore, the MDT measurement may be performed according to the MDT configuration parameter.

In the above embodiment, the minimization of drive test (MDT) measurement triggering request sent by the base station through the broadcast signaling is received, and the MDT measurement is performed when it is determined according to the MDT measurement triggering request that the UE needs to start the MDT measurement, so that the MDT measurement information may be reported to the base station.

FIG. 4 is a flowchart of another measurement method shown in an exemplary embodiment of the present disclosure. As shown in FIG. 4, after the above step S102, the method may further include:
step S303, receiving an MDT measurement information reporting request sent by the base station through the broadcast signaling; and
step S304, reporting stored MDT measurement information in response to determining, according to the MDT measurement information reporting request, that the UE needs to report the stored MDT measurement information.

The current UE may receive the broadcast signaling, and parses out second identity information from the broadcast signaling, and the UE determines that the UE itself needs to report the stored MDT measurement information if an identity of the UE is located in the second identity information or the second identity information is empty.

After receiving the MDT measurement information reported by the current UE, the base station may adjust a network parameter based on the MDT measurement information to optimize the network.

In the above embodiment, when the MDT measurement information reporting request sent by the base station through the broadcast signaling is received, and it is determined according to the MDT measurement information reporting request that the UE itself needs to report the stored MDT measurement information, the stored MDT measurement information is reported, so that it can implement that the stored MDT measurement information is reported to the base station side.

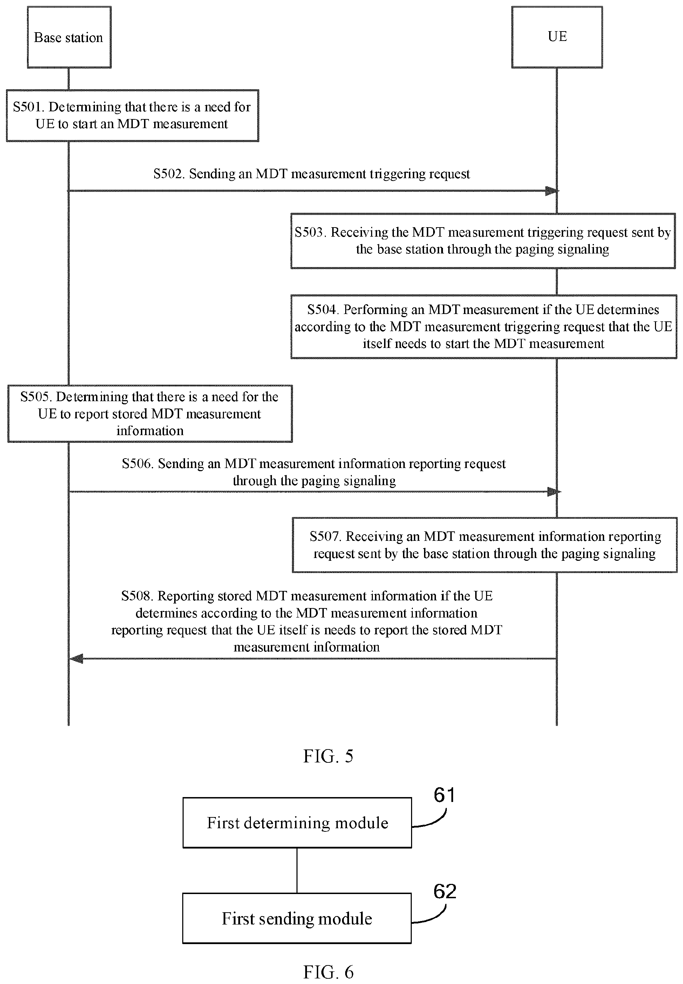

FIG. 5 is a signaling flowchart of a measurement method shown in an exemplary embodiment of the present disclosure. An embodiment is described from the perspective of interaction between a base station and a UE. As shown in FIG. 5, the method includes:
step S501, determining, by a base station, that there is a need for a UE to start an MDT measurement;
step S502, sending, by the base station, an MDT measurement triggering request through paging signaling, wherein the paging signaling carries a UE ID and a logged MDT parameter;
step S503, receiving, by the UE, the MDT measurement triggering request sent by the base station through the paging signaling;
step S504, performing, by the UE, an MDT measurement if the UE determines according to the MDT measurement triggering request that the UE itself needs to start the MDT measurement, wherein if the UE ID carried in the paging signaling is a current UE ID, the UE determines that the UE itself needs to start the MDT measurement, and performs the logged MDT measurement according to the logged MDT parameter;
step S505, determining, by the base station, that there is a need for the UE to report stored MDT measurement information;
step S506, sending, by the base station, an MDT measurement information reporting request through the paging signaling;
step S507, receiving, by the UE, an MDT measurement information reporting request sent by the base station through the paging signaling; and
step S508, reporting, by the UE, stored MDT measurement information if the UE determines according to the MDT measurement information reporting request that the UE itself needs to report the stored MDT measurement information.

In the above embodiment, through the interaction between the base station and the UE, when the UE determines according to the MDT measurement triggering request that the UE itself needs to start the MDT measurement, the UE performs the MDT measurement, and when the UE determines according to the MDT measurement information reporting request that the UE itself needs to report the stored MDT measurement information, the UE reports the stored MDT measurement information, so that the base station can obtain the UE measurement information for rapid RRM, mobility, and beam management.

FIG. 6 is a block diagram showing a measurement triggering device according to an exemplary embodiment. The device is located in a base station. As shown in FIG. 6, the device includes:
a first determining module 61, configured to determine that there is a need for a user equipment (UE) to start a minimization of drive test (MDT) measurement; and
a first sending module 62, configured to, after the first determining module 61 determines that there is the need for the UE to start the MDT measurement, send an MDT measurement triggering request through broadcast signaling to trigger a corresponding UE to perform the MDT measurement.

The broadcast signaling may be paging signaling or minimum system information (minimum SI). The minimum SI includes a master information block (MIB) and a system information block (SIB) 1.

In the above embodiment, if it is determined that the UE needs to start the MDT measurement, the MDT measurement triggering request is sent through the broadcast signaling to trigger the corresponding UE to perform the MDT measurement, so that the base station side may obtain UE measurement information for rapid radio resource management (RRM), mobility, and beam management.

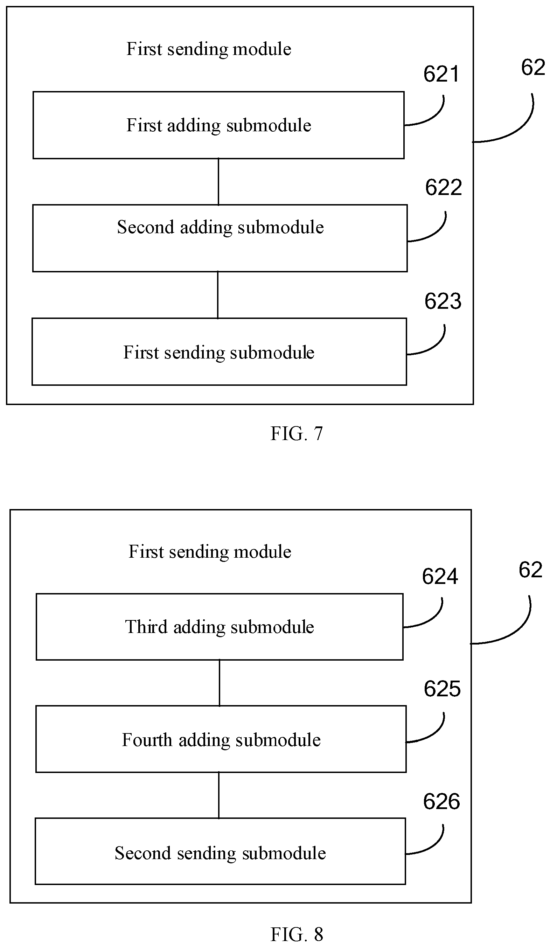

FIG. 7 is a block diagram showing another measurement triggering device according to an exemplary embodiment. As shown in FIG. 7, on the basis of the above-mentioned embodiment shown in FIG. 6, the first sending module 62 may include:
a first adding submodule 621, configured to add first signaling into the broadcast signaling;
a second adding submodule 622, configured to add at least one of an identity of the UE needing to start the MDT measurement and an identity of a group including the UE needing to start the MDT measurement, and an MDT configuration parameter into the first signaling added by the first adding submodule 621; and
a first sending submodule 623, configured to send the MDT measurement triggering request through the broadcast signaling added with the first signaling, the first signaling being added with information by the second adding submodule 622.

The first signaling may be new signaling, for example, may be MDT configuration signaling. The MDT configuration parameter may include logged MDT parameter and/or immediate MDT parameter. The logged MDT parameter is configured to trigger logged MDT, and the immediate MDT parameter is configured to trigger immediate MDT.

In the above embodiment, the first signaling is added into the broadcast signaling; the MDT configuration parameter and at least one of the ID of the UE needing to start the MDT measurement and the ID of the group including the UE needing to start the MDT measurement are added into the first signaling; and then the MDT measurement triggering request is sent through the broadcast signaling added with the first signaling, so that it implements the sending of the MDT measurement triggering request through the broadcast signaling.

FIG. 8 is a block diagram showing another measurement triggering device according to an exemplary embodiment. As shown in FIG. 8, on the basis of the above-mentioned embodiment shown in FIG. 6, the first sending module 62 may include:
a third adding submodule 624, configured to add first signaling into the broadcast signaling;
a fourth adding submodule 625, configured to add an MDT configuration parameter into the first signaling added by the third adding submodule 624; and
a second sending submodule 626, configured to send the MDT measurement triggering request through the broadcast signaling added with the first signaling, the first signaling being added with information by the fourth adding submodule 625.

The first signaling may be new signaling, for example, may be MDT configuration signaling. The MDT configuration parameter may include a logged MDT parameter and/or an immediate MDT parameter. The logged MDT parameter is configured to trigger a logged MDT measurement, and the immediate MDT parameter is configured to trigger an immediate MDT measurement.

In the embodiment, the first signaling does not include any UE ID or group ID.

In the above embodiment, the first signaling is adding into the broadcast signaling; the MDT configuration parameter is added into the first signaling; and then the MDT measurement triggering request is sent through the broadcast signaling added with the first signaling, so that it implements the sending of the MDT measurement triggering request through the broadcast signaling.

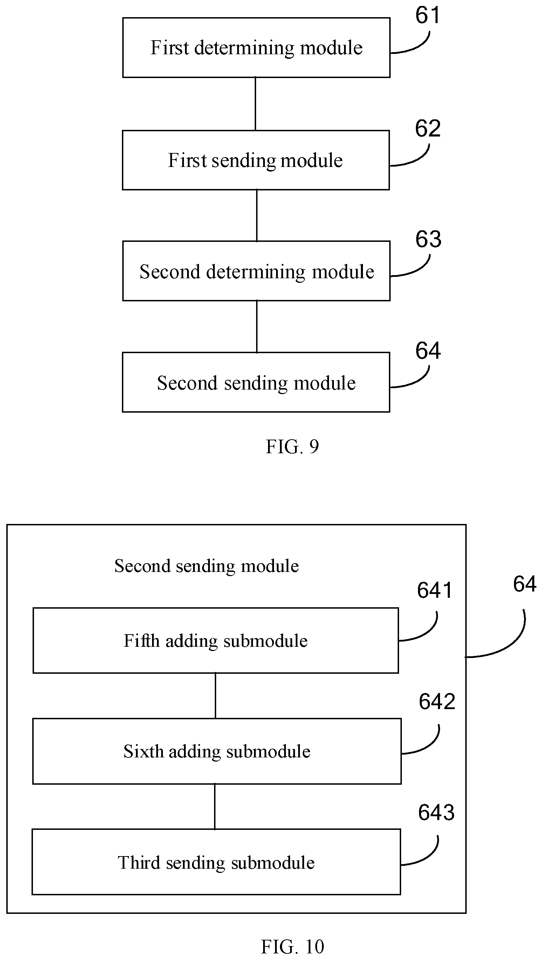

FIG. 9 is a block diagram showing another measurement triggering device according to an exemplary embodiment. As shown in FIG. 9, based on the above-mentioned embodiment shown in FIG. 6, the device may further include:
a second determining module 63, configured to determine that there is the need for the UE to report stored MDT measurement information; and
a second sending module 64, configured to, after the second determining module 63 determines that there is the need for the UE to report the stored MDT measurement information, send an MDT measurement information reporting request through the broadcast signaling to trigger the corresponding UE to report the stored MDT measurement information.

In the above embodiment, if it is determined that the UE needs to report the stored MDT measurement information, the MDT measurement information reporting request is sent through the broadcast signaling to trigger the corresponding UE to report the stored MDT measurement information, so that the base station side may obtain UE measurement information for rapid RRM, mobility, and beam management.

FIG. 10 is a block diagram showing another measurement triggering device according to an exemplary embodiment. As shown in Fig. 10, based on the embodiment shown in Fig. 9, the second sending module 64 may include:
a fifth adding submodule 641, configured to add second signaling into the broadcast signaling;
a sixth adding submodule 642, configured to add at least one of an identity of the UE needing to report the MDT measurement information and an identity of a group including the UE needing to report the MDT measurement information into the second signaling added by the fifth adding submodule 642; and
a third sending submodule 643, configured to send the MDT measurement information reporting request through the broadcast signaling added with the second signaling, the second signal being added with information by the sixth adding submodule 642.

The second signaling may be added into the broadcast signaling; at least one of the identity of the UE needing to report the MDT measurement information and the identity of the group including the UE needing to report the MDT measurement information is added into the second signaling; and then the MDT measurement information reporting request is sent through the broadcast signaling added with the second signaling.

The second signaling is new signaling, for example, may a stored measurement report (logMeasReport). The signaling may include an ID of a certain UE, or may include a group ID of a group including specific UEs, or may not include any UE ID or group ID.

In the above embodiment, the second signaling may be added into the broadcast signaling; at least one of the identity of the UE needing to report the MDT measurement information and the identity of the group including the UE needing to report the MDT measurement information is added into the second signaling; and the MDT measurement information reporting request is sent through the broadcast signaling added with the second signaling, so that it implements the sending of the MDT measurement information reporting request through the broadcast signaling.

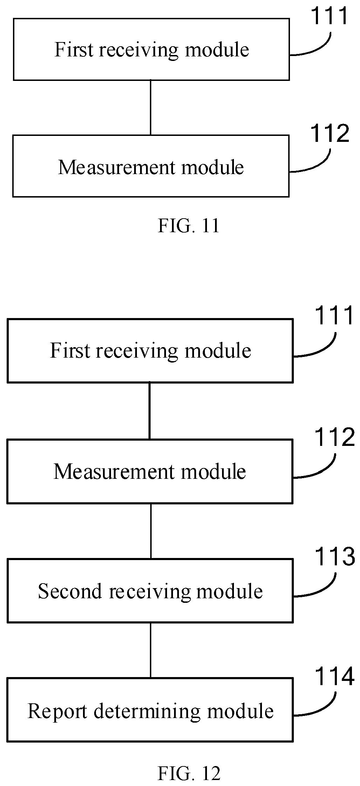

FIG. 11 is a block diagram showing a measuring device according to an exemplary embodiment. The device is located in UE. As shown in FIG. 11, the device includes:
a first receiving module 111, configured to receive a minimization of drive test (MDT) measurement triggering request sent by a base station through broadcast signaling, wherein the broadcast signaling may be paging signaling or minimum system information (minimum SI), and the minimum SI includes a master information block (MIB) and a system information block (SIB) 1; and
a measurement module 112, configured to perform an MDT measurement in response to determining, according to the MDT measurement triggering request received by the first receiving module 111, that the UE needs to start the MDT measurement.

Current UE receives the broadcast signaling sent by the base station, and parses out first identity information and an MDT configuration parameter from the broadcast signaling. It may be determined that the UE needs to start the MDT measurement if an identity of the UE is located in the first identity information or the first identity information is empty. Therefore, the MDT measurement may be performed according to the MDT configuration parameter.

In the above embodiment, the minimization of drive test (MDT) measurement triggering request sent by the base station through the broadcast signaling is received, and the MDT measurement is performed when it is determined according to the MDT measurement triggering request that the UE needs to start the MDT measurement, so that the MDT measurement information may be reported to the base station.

FIG. 12 is a block diagram showing another measurement device according to an exemplary embodiment. As shown in FIG. 12, on the basis of the above-mentioned embodiment shown in FIG. 11, the device may further include:
a second receiving module 113, configured to receive an MDT measurement information reporting request sent by the base station through the broadcast signaling; and
a report determining module 114, configured to report stored MDT measurement information in response to determining, according to the MDT measurement information reporting request received by the second receiving module 113, that the UE needs to report the stored MDT measurement information.

The current UE may receive the broadcast signaling, and parses out second identity information from the broadcast signaling, and the UE determines that the UE itself needs to report the stored MDT measurement information if an identity of the UE is located in the second identity information or the second identity information is empty.

After receiving the MDT measurement information reported by the current UE, the base station may adjust a network parameter based on the MDT measurement information to optimize the network.

In the above embodiment, when the MDT measurement information reporting request sent by the base station through the broadcast signaling is received, and it is determined according to the MDT measurement information reporting request that the UE itself needs to report the stored MDT measurement information, the stored MDT measurement information is reported, so that it can implement that the stored MDT measurement information is reported to the base station side.

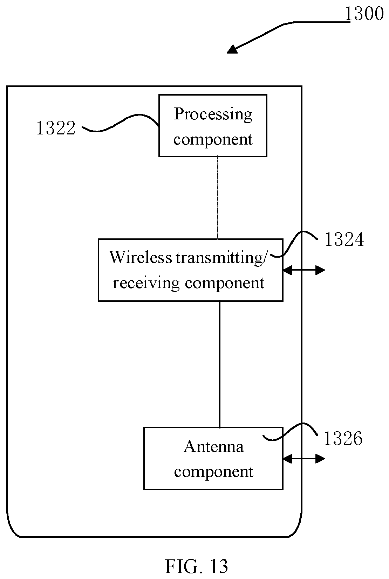

FIG. 13 is a block diagram showing a device suitable for measurement triggering according to an exemplary embodiment. The device 1300 may be provided as a base station. Referring to FIG. 13, the device 1300 includes a processing component 1322, a wireless transmitting/receiving component 1324, an antenna component 1326, and a signal processing part specific to a wireless interface. The processing component 1322 may further include one or more processors.

One of the processors in the processing component 1322 may be configured to:
determine that there is a need for a user equipment (UE) to start a minimization of drive test (MDT) measurement; and
send an MDT measurement triggering request through broadcast signaling to trigger a corresponding UE to perform the MDT measurement.

An exemplary embodiment also provides a non-transitory computer-readable storage medium including instructions, which can be executed by the processing component 1322 of the device 1300 to complete the measurement triggering method described above. For example, the non-transitory computer-readable storage medium may be ROM, random access memory (RAM), CD-ROM, magnetic tape, floppy disk, optical data storage device, and the like.

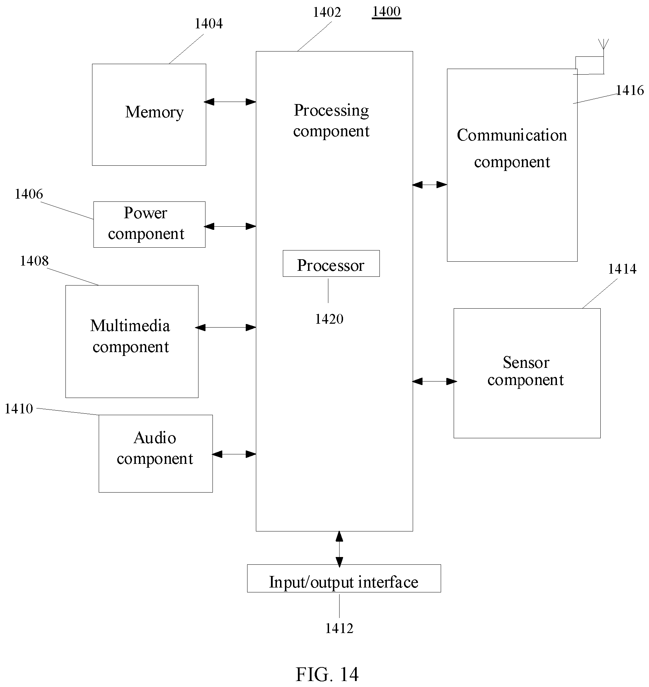

FIG. 14 is a block diagram showing a device suitable for measurement according to an exemplary embodiment. For example, the device 1400 may be a mobile phone, a computer, a digital broadcasting terminal, a messaging device, a game console, a tablet device, a medical device, a fitness device, a personal digital assistant, and other user equipment.

Referring to FIG. 14, the device 200 may include one or more of a processing component 1402, a memory 1404, a power component 1406, a multimedia component 1408, an audio component 1410, an input/output (I/O) interface 1412, a sensor component 1414, and a communication component 1416.

The processing component 1402 generally controls the overall operations of the control device 1400, such as operations associated with display, telephone calls, data communications, camera operations, and recording operations. The processing component 1402 may include one or more processors 1420 to execute instructions to complete all or part of the steps of the foregoing method. In addition, the processing component 1402 may include one or more modules to facilitate interaction between the processing component 1402 and other components. For example, the processing component 1402 may include a multimedia module to facilitate the interaction between the multimedia component 1408 and the processing component 1402.

One processor 1420 of the processing component 1402 may be configured to:
receive a minimization of drive test (MDT) measurement triggering request sent by a base station through broadcast signaling; and
perform an MDT measurement in response to determining, according to the MDT measurement triggering request, that the UE needs to start the MDT measurement.

The memory 1404 is configured to store various types of data to support the operation of the device 1400. Examples of these data include instructions for any application or method operating on the device 1400, contact data, phone book data, messages, pictures, videos and the like. The memory 1404 may be implemented by any type of volatile or non-volatile storage device or a combination thereof, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 1406 provides power to various components of the device 1400. The power component 1406 may include a power management system, one or more power supplies, and other components associated with generating, managing, and distributing power for the device 1400.

The multimedia component 1408 includes a screen that provides an output interface between the device 1400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 1408 includes a front camera and/or a rear camera. When the device 1400 is in an operation mode, such as a shooting mode or a video mode, the front camera and/or the rear camera can receive external multimedia data. Each front camera and rear camera may be a fixed optical lens system or have focal length and optical zoom capabilities.

The audio component 1410 is configured to output and/or input audio signals. For example, the audio component 1410 includes a microphone (MIC), and when the device 1400 is in an operation mode, such as a call mode, a recording mode, and a voice recognition mode, the microphone is configured to receive an external audio signal. The received audio signal can be further stored in the memory 1404 or sent via the communication component 1416. In some embodiments, the audio component 1410 further includes a speaker for outputting audio signals.

The I/O interface 1412 provides an interface between the processing component 1402 and a peripheral interface module. The above-mentioned peripheral interface module may be a keyboard, a click wheel, a button, and the like. These buttons may include but are not limited to home button, volume button, start button, and lock button.

The sensor component 1414 includes one or more sensors for providing the device 1400 with various aspects of state evaluation. For example, the sensor component 1414 can detect the on/off status of the device 1400 and the relative positioning of components. For example, the component is a display and keypad of the device 1400. The sensor component 1414 can also detect the position change of the device 1400 or a component of the device 1400, the presence or absence of contact between the user and the device 1400, the orientation or acceleration/deceleration of the device 1400, and the temperature change of the device 1400. The sensor component 1414 may include a proximity sensor configured to detect the presence of nearby objects when there is no physical contact. The sensor component 1414 may also include a light sensor, such as a CMOS or CCD image sensor, for use in imaging applications. In some embodiments, the sensor component 1414 may also include an acceleration sensor, a gyroscope sensor, a magnetic sensor, a pressure sensor, or a temperature sensor.

The communication component 1416 is configured to facilitate wired or wireless communication between the device 1400 and other devices. The device 1400 can access a wireless network based on a communication standard, such as WiFi, 2G, or 3G, or a combination thereof. In an exemplary embodiment, the communication component 1416 receives a broadcast signal or broadcast related information from an external broadcast management system via a broadcast channel. In an exemplary embodiment, the communication component 1416 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the device 1400 may be implemented by one or more application specific integrated circuits (ASIC), digital signal processors (DSP), digital signal processing device (DSPD), programmable logic devices (PLD), field programmable gate array (FPGA), controller, microcontroller, microprocessor, or other electronic components, used to perform the above-mentioned methods.

An exemplary embodiment also provides a non-transitory computer-readable storage medium including instructions, such as the memory 1404 including instructions, and the instructions may be executed by the processor 1420 of the device 1400 to complete the foregoing method. For example, the non-transitory computer-readable storage medium may be ROM, random access memory (RAM), CD-ROM, magnetic tape, floppy disk, optical data storage device and the like.

Related parts of the device embodiment may refer to the corresponding description in the method embodiment, since the device embodiment basically corresponds to the method embodiment. The device embodiment described above is merely illustrative, where the units described as separate components may or may not be physically separated, and the component displayed as a unit may or may not be a physical unit, that is, it may be located in one place, or it may be distributed onto a plurality of network units. Some or all of the modules may be selected according to actual needs to achieve the objectives of the solutions of the embodiments, which can be understood and implemented by those skilled in the art without creative work.

It should be noted that in the present disclosure, the relational terms such as first and second are only used to distinguish one entity or operation from another entity or operation, and do not necessarily require or imply any actual relationship or sequence between these entities or operations. The terms "include", "comprise", or any other variants thereof are intended to cover non-exclusive inclusion, so that a process, method, article or device that includes a series of elements includes not only those elements, but also other elements that are not explicitly listed, or also includes elements inherent to such process, method, article, or device. If there are no more restrictions, an element defined by a sentence "including a ..." does not exclude the existence of another identical element in the process, method, article, or device that includes the element.

Those skilled in the art will easily conceive of other embodiments of the present disclosure after considering the specification and practicing the present disclosure disclosed herein. The present application is intended to cover any variations, uses, or adaptive changes of the present disclosure. These variations, uses, or adaptive changes follow the general principles of the present disclosure and include common knowledge or conventional technical means in the technical field that are not disclosed in the present disclosure.

It should be understood that the present disclosure is not limited to the precise structure that has been described above and shown in the drawings, and various modifications and changes can be made without departing from the scope defined by the appended set of claims.

## Claims

1. A measurement triggering method, applied to a base station, comprising:
determining (S101, S501) that there is a need for a user equipment, UE, to start a minimization of drive test, MDT, measurement; and
sending (S102, S502) an MDT measurement triggering request through first broadcast signaling to trigger a corresponding UE to perform the MDT measurement,
wherein the method further comprises:
determining (S103, S505) that there is a need for the UE to report stored MDT measurement information; and
sending (S104, S506) an MDT measurement information reporting request through second broadcast signaling to trigger the corresponding UE to report the stored MDT measurement information,
**characterized in that** sending (S104, S506) the MDT measurement information reporting request through the second broadcast signaling comprises:
adding second signaling into the second broadcast signaling;
adding at least one of an identity of the UE needing to report the MDT measurement information and an identity of a group comprising the UE needing to report the MDT measurement information into the second signaling; and
sending the MDT measurement information reporting request through the second broadcast signaling added with the second signaling.

2. The method according to claim 1, wherein sending (S102, S502) the MDT measurement triggering request through the first broadcast signaling comprises:
adding first signaling into the first broadcast signaling;
adding at least one of an identity of the UE needing to start the MDT measurement and an identity of a group comprising the UE needing to start the MDT measurement, and an MDT configuration parameter into the first signaling; and
sending the MDT measurement triggering request through the first broadcast signaling added with the first signaling.

3. The method according to claim 1, wherein sending (S102, S502) the MDT measurement triggering request through the first broadcast signaling comprises:
adding first signaling into the first broadcast signaling;
adding an MDT configuration parameter into the first signaling; and
sending the MDT measurement triggering request through the first broadcast signaling added with the first signaling.

4. The method according to any one of claims 1 to 3, wherein the first and second broadcast signaling comprises paging signaling or the first and second broadcast signaling comprises minimum system information.

5. A measurement method, applied to a user equipment, UE, comprising:
receiving (S103, S503) a minimization of drive test, MDT, measurement triggering request sent by a base station through a first broadcast signaling; and
performing (S302, S504) an MDT measurement in response to determining, according to the MDT measurement triggering request, that the UE needs to start the MDT measurement,
wherein the method further comprises:
receiving (S303, S507) an MDT measurement information reporting request sent by the base station through a second broadcast signaling; and
reporting (S304, S508) stored MDT measurement information in response to determining, according to the MDT measurement information reporting request, that the UE needs to report the stored MDT measurement information,
**characterized in that** receiving (S303, S507) the MDT measurement information reporting request sent by the base station through the second broadcast signaling comprises:
receiving the second broadcast signaling, and parsing out second identity information from the second broadcast signaling, and
determining, according to the MDT measurement information reporting request, that the UE needs to report the stored MDT measurement information comprises:
determining that the UE needs to report the stored MDT measurement information in response to that at least one of an identity of the UE and an identity of a group comprising the UE is located in the second identity information.

6. The method according to claim 5, wherein receiving (S103, S503) the MDT measurement triggering request sent by the base station through the first broadcast signaling comprises:
receiving the first broadcast signaling, and parsing out first identity information and an MDT configuration parameter from the first broadcast signaling, and
performing the MDT measurement in response to determining, according to the MDT measurement triggering request, that the UE needs to start the MDT measurement comprises:
performing the MDT measurement according to the MDT configuration parameter in response to that at least one of an identity of the UE and an identity of a group comprising the UE is located in the first identity information, wherein the first and second broadcast signaling comprises paging signaling or the first and second broadcast signaling comprises minimum system information.

7. A measurement triggering device, applied to a base station and configured to perform the measurement triggering method according to any one of claims 1 to 4.

8. A measurement device, applied to a user equipment, UE, and configured to perform the measurement triggering method according to any one of claims 5 to 6.

9. A computer-readable storage medium having computer instructions stored thereon that, when being executed by a processor, cause a base station to implement the steps of the measurement triggering method according to any one of claims 1 to 4.

10. A computer-readable storage medium having computer instructions stored thereon that, when being executed by a processor, cause a user equipment, UE, to implement the steps of the measurement method according to any one of claims 5 to 6.

## Patentansprüche

1. Messauslöseverfahren, das bei einer Basisstation angewendet wird, umfassend:
Bestimmen (S101, S501), dass ein Bedarf besteht, dass ein Benutzerendgerät, UE, eine Minimization-of-Drive-Test-, MDT, Messung startet; und
Senden (S102, S502) einer MDT-Messauslöseanfrage über eine erste Broadcast-Signalisierung, um ein entsprechendes UE so auszulösen, dass es die MDT-Messung durchführt,
wobei das Verfahren ferner umfasst:
Bestimmen (S103, S505), dass ein Bedarf besteht, dass das UE gespeicherte MDT-Messinformationen meldet; und
Senden (S104, S506) einer MDT-Messinformationsmeldeanfrage über eine zweite Broadcast-Signalisierung, um das entsprechende UE so auszulösen, dass es die gespeicherten MDT-Messinformationen meldet,
**dadurch gekennzeichnet, dass** das Senden (S104, S506) der MDT-Messinformationsmeldeanfrage über die zweite Broadcast-Signalisierung umfasst:
Hinzufügen einer zweiten Signalisierung zu der zweiten Broadcast-Signalisierung:
Hinzufügen von mindestens einem aus einer Identität des UE, das die MDT-Messinformationen melden muss, und einer Identität einer Gruppe, die das UE umfasst, das die MDT-Messinformationen melden muss, zu der zweiten Signalisierung; und
Senden der MDT-Messinformationsmeldeanfrage über die zweite Broadcast-Signalisierung, zu der die zweite Signalisierung hinzugefügt wurde.

2. Verfahren nach Anspruch 1, wobei das Senden (S102, S502) der MDT-Messauslöseanfrage über die erste Broadcast-Signalisierung umfasst:
Hinzufügen einer ersten Signalisierung zu der ersten Broadcast-Signalisierung;
Hinzufügen von mindestens einem aus einer Identität des UE, das die MDT-Messung starten muss, und einer Identität einer Gruppe, die das UE umfasst, das die MDT-Messung starten muss, und eines MDT-Konfigurationsparameters zu der ersten Signalisierung; und
Senden der MDT-Messauslöseanfrage über die erste Broadcast-Signalisierung, die zu der ersten Signalisierung hinzugefügt wurde.

3. Verfahren nach Anspruch 1, wobei das Senden (S102, S502) der MDT-Messauslöseanfrage über die erste Broadcast-Signalisierung umfasst:
Hinzufügen der ersten Signalisierung zu der ersten Broadcast-Signalisierung;
Hinzufügen eines MDT-Konfigurationsparameters zu der ersten Signalisierung; und
Senden der MDT-Messauslöseanfrage über die erste Broadcast-Signalisierung, die zu der ersten Signalisierung hinzugefügt wurde.

4. Verfahren nach einem der Ansprüche 1 bis 3, wobei die erste und die zweite Broadcast-Signalisierung eine Paging-Signalisierung umfasst oder die erste und die zweite Broadcast-Signalisierung Mindestsysteminformationen umfasst.

5. Messverfahren, das bei einem Benutzerendgerät, UE, angewendet wird, umfassend:
Empfangen (S103, S503) einer von der Basisstation über eine erste Broadcast-Signalisierung gesendeten Minimization-of-Drive-Test-, MDT, Messauslöseanfrage; und
Durchführen (S302, S504) einer MDT-Messung als Reaktion auf das Bestimmen, entsprechend der MDT-Messauslöseanfrage, dass das UE die MDT-Messung starten muss, wobei das Verfahren ferner umfasst:
Empfangen (S303, S507) einer von der Basisstation über eine zweite Broadcast-Signalisierung gesendeten MDT-Messinformationsmeldeanfrage; und
Melden (S304, S508) gespeicherter MDT-Messinformationen als Reaktion auf das Bestimmen, entsprechend der MDT-Messinformationsmeldeanfrage, dass das UE die gespeicherten MDT-Messinformationen melden muss,
**dadurch gekennzeichnet, dass** das Empfangen (S303, S507) der MDT- Messinformationsmeldeanfrage, die von der Basisstation über die zweite Broadcast-Signalisierung gesendet wird, umfasst:
Empfangen der zweiten Broadcast-Signalisierung und Herausparsen von zweiten Identitätsinformationen aus der zweiten Broadcast-Signalisierung, und
wobei das Bestimmen, entsprechend der MDT-Messinformationsmeldeanfrage, dass das UE die gespeicherten MDT-Messinformationen melden muss, umfasst:
Bestimmen, dass das UE die gespeicherten MDT-Messinformationen melden muss, als Reaktion darauf, dass sich mindestens eines aus einer Identität des UE und einer Identität einer Gruppe, die das UE umfasst, in den zweiten Identitätsinformationen befindet.

6. Verfahren nach Anspruch 5, wobei das Empfangen (S103, S503) der von der Basisstation über die erste Broadcast-Signalisierung gesendeten MDT-Messauslöseanfrage umfasst:
Empfangen der ersten Broadcast-Signalisierung und Herausparsen von ersten Identitätsinformationen und eines MDT-Konfigurationsparameters aus der ersten Broadcast-Signalisierung, und
wobei das Durchführen der MDT-Messung als Reaktion auf das Bestimmen, entsprechend der MDT-Messauslöseanfrage, dass das UE die MDT-Messung starten muss, umfasst:
Durchführen der MDT-Messung entsprechend dem MDT-Konfigurationsparameter als Reaktion darauf, dass sich mindestens eines aus einer Identität des UE und einer Identität einer Gruppe, die das UE umfasst, in den ersten Identitätsinformationen befindet, wobei die erste und die zweite Broadcast-Signalisierung eine Paging-Signalisierung umfasst oder die erste und die zweite Broadcast-Signalisierung Mindestsysteminformationen umfasst.

7. Messauslösevorrichtung, die bei einer Basisstation angewendet wird und dazu ausgebildet ist, das Messauslöseverfahren nach einem der Ansprüche 1 bis 4 durchzuführen.

8. Messvorrichtung, die bei einem Benutzerendgerät, UE, angewendet wird und dazu ausgebildet ist, das Messauslöseverfahren nach einem der Ansprüche 5 bis 6 durchzuführen.

9. Computerlesbares Speichermedium, auf dem Computeranweisungen gespeichert sind, die bei Ausführung durch einen Prozessor bewirken, dass eine Basisstation die Schritte des Messauslöseverfahrens nach einem der Ansprüche 1 bis 4 implementiert.

10. Computerlesbares Speichermedium, auf dem Computeranweisungen gespeichert sind, die bei Ausführung durch einen Prozessor bewirken, dass ein Benutzerendgerät, UE, die Schritte des Messverfahrens nach einem der Ansprüche 5 bis 6 implementiert.

## Revendications

1. Procédé de déclenchement de mesure, appliqué à une station de base, comprenant les étapes consistant à :
déterminer (S101, S501) la nécessité qu'un équipement d'utilisateur, dit UE, démarre une mesure de réduction au minimum de test de couverture, dit MDT ; et
envoyer (S102, S502) une demande de déclenchement de mesure de MDT par l'intermédiaire d'une première signalisation de diffusion pour amener un UE correspondant à déclencher une exécution de la mesure de MDT,
dans lequel le procédé comprend en outre les étapes consistant à :
déterminer (S103, S505) la nécessité que l'UE rapporte des informations de mesure de MDT mémorisées ; et
envoyer (S104, S506) une demande de rapport d'informations de mesure de MDT par l'intermédiaire d'une seconde signalisation de diffusion pour amener l'UE correspondant à déclencher un rapport les informations de mesure de MDT mémorisées,
**caractérisé en ce que** l'étape d'envoi (S104, S506) de la demande de rapport d'informations de mesure de MDT par l'intermédiaire de la seconde signalisation de diffusion consiste à :
ajouter une seconde signalisation dans la seconde signalisation de diffusion ;
ajouter au moins l'une d'une identité de l'UE nécessitant de rapporter les informations de mesure de MDT et d'une identité d'un groupe comprenant l'UE nécessitant de rapporter les informations de mesure de MDT dans la seconde signalisation ; et
envoyer la demande de rapport d'informations de mesure de MDT par l'intermédiaire de la seconde signalisation de diffusion à laquelle a été ajouté la seconde signalisation.

2. Procédé selon la revendication 1, dans lequel l'étape d'envoi (S102, S502) de la demande de déclenchement de mesure de MDT par l'intermédiaire de la première signalisation de diffusion consiste à :
ajouter une première signalisation dans la première signalisation de diffusion ;
ajouter au moins l'une d'une identité de l'UE nécessitant de démarrer la mesure de MDT et d'une identité d'un groupe comprenant l'UE nécessitant de démarrer la mesure de MDT, et un paramètre de configuration de MDT dans la première signalisation ; et
envoyer la demande de déclenchement de mesure de MDT par l'intermédiaire de la première signalisation de diffusion à laquelle a été ajouté la première signalisation.

3. Procédé selon la revendication 1, dans lequel l'étape d'envoi (S102, S502) de la demande de déclenchement de mesure de MDT par l'intermédiaire de la première signalisation de diffusion consiste à :
ajouter une première signalisation dans la première signalisation de diffusion ;
ajouter un paramètre de configuration de MDT dans la première signalisation ; et
envoyer la demande de déclenchement de mesure de MDT par l'intermédiaire de la première signalisation de diffusion à laquelle a été ajouté la première signalisation.

4. Procédé selon l'une quelconque des revendications 1 à 3, dans lequel les première et seconde signalisations de diffusion comprennent une signalisation de téléavertissement ou les première et seconde signalisations de diffusion comprennent des informations de système minimales.

5. Procédé de mesure, appliqué à un équipement d'utilisateur, dit UE, comprenant les étapes consistant à :
recevoir (S103, S503) une demande de déclenchement de mesure de réduction au minimum de test de couverture, dit MDT, envoyée par une station de base par l'intermédiaire d'une première signalisation de diffusion ; et
effectuer (S302, S504) une mesure de MDT en réponse à la détermination, conformément à la demande de déclenchement de mesure de MDT, du fait que l'UE nécessite de démarrer la mesure de MDT,
dans lequel le procédé comprend en outre les étapes consistant à :
recevoir (S303, S507) une demande de rapport d'informations de mesure de MDT envoyée par la station de base par l'intermédiaire d'une seconde signalisation de diffusion ; et
rapporter (S304, S508) des informations de mesure de MDT mémorisées en réponse à la détermination, conformément à la demande de rapport d'informations de mesure de MDT, du fait que l'UE nécessite de rapporter les informations de mesure de MDT mémorisées,
**caractérisé en ce que** l'étape de réception (S303, S507) de la demande de rapport d'informations de mesure de MDT envoyée par la station de base par l'intermédiaire de la seconde signalisation de diffusion consiste à :
recevoir la seconde signalisation de diffusion, et analyser des secondes informations d'identité de la seconde signalisation de diffusion, et
l'étape de détermination, conformément à la demande de rapport d'informations de mesure de MDT, du fait que l'UE nécessite de rapporter les informations de mesure de MDT mémorisées consiste à :
déterminer que l'UE nécessite de rapporter les informations de mesure de MDT mémorisées en réponse au fait qu'au moins l'une d'une identité de l'UE et d'une identité d'un groupe comprenant l'UE se trouve dans les secondes informations d'identité.

6. Procédé selon la revendication 5, dans lequel l'étape de réception (S103, S503) de la demande de déclenchement de mesure de MDT envoyée par la station de base par l'intermédiaire de la première signalisation de diffusion consiste à :
recevoir la première signalisation de diffusion, et analyser des premières informations d'identité et un paramètre de configuration de MDT à partir de la première signalisation de diffusion, et
l'étape d'exécution de la mesure de MDT en réponse à la détermination, conformément à la demande de déclenchement de mesure de MDT, du fait que l'UE nécessite de démarrer la mesure de MDT consiste à :
effectuer la mesure de MDT conformément au paramètre de configuration de MDT en réponse au fait qu'au moins l'une d'une identité de l'UE et d'une identité d'un groupe comprenant l'UE se trouve dans les premières informations d'identité, dans lequel les première et seconde signalisations de diffusion comprennent une signalisation de téléavertissement ou les première et seconde signalisations de diffusion comprennent des informations de système minimales.

7. Dispositif de déclenchement de mesure, appliqué à une station de base et configuré pour mettre en œuvre le procédé de déclenchement de mesure selon l'une quelconque des revendications 1 à 4.

8. Dispositif de mesure, appliqué à un équipement d'utilisateur, dit UE, et configuré pour mettre en œuvre le procédé de déclenchement de mesure selon l'une ou l'autre des revendications 5 et 6.

9. Support d'informations lisible par ordinateur comportant des instructions d'ordinateur mémorisées en son sein qui, lorsqu'elles sont exécutées par un processeur, amènent une station de base à mettre en œuvre les étapes du procédé de déclenchement de mesure selon l'une quelconque des revendications 1 à 4.

10. Support d'informations lisible par ordinateur comportant des instructions d'ordinateur mémorisées en son sein qui, lorsqu'elles sont exécutées par un processeur, amènent un équipement d'utilisateur, dit UE, à mettre en œuvre les étapes du procédé de mesure selon l'une ou l'autre des revendications 5 et 6.
